# EUROPÄISCHE PATENTSCHRIFT

(11) **EP 2 220 927 B1**
(45) Veröffentlichungstag und Bekanntmachung des Hinweises auf die Patenterteilung: **31.10.2012**
(21) Anmeldenummer: 09002346.6
(22) Anmeldetag: 19.02.2009
(51) Int. Cl.: A01D 43/14

(54) **Gartengerät zur Rasenpflege**
Garden device for lawn maintenance
Appareil de jardinage pour l'entretien de la pelouse

(43) Veröffentlichungstag der Anmeldung: 25.08.2010
(73) Patentinhaber: MTD Products Inc., Valley City, OH 44280 (US)
(72) Erfinder: Draghici, Bogdan, 57548 Kirchen (DE); Held, Peter, 57584 Scheuerfeld (DE); Kipping, Andreas, 57537 Selbach (DE)
(74) Vertreter: Feldkamp, Rainer

(56) Entgegenhaltungen:
- US-A- 2 974 963
- US-A- 5 493 852
- US-A1- 2008 053 672

## Beschreibung

Die Erfindung bezieht sich auf ein Gartengerät der im Oberbegriff des Anspruchs 1 genannten Art.

Ein Rasenmäher mit einer Streuvorrichtung in Gestalt eines Düngerstreuers ist aus der US 5 493 852 bekannt. Der Düngerstreuer ist hierbei als Korb ausgebildet, der an einer Querstange des Führungsholm des Rasenmähers einhängbar ist und an einer Unterseite Streuöffnungen aufweist. Der Korb ist über eine Stange mit dem Mähergehäuse verbunden, um die vom Mäher erzeugten Schwingungen auf den eingehängten Korb zu übertragen, und so das Austragen des Düngers über die Streuöffnungen am Boden des Behälters zu begünstigen.

Da das Austragen des Düngers in Fahrtrichtung des Mähers hinter dem Mähwerk erfolgt, wird der Dünger unmittelbar auf dem soeben geschnittenen Gras abgelegt und gelangt nicht oder nur unvollkommen und ungleichmäßig auf den Boden, in welchem er wirksam werden soll. Dieser Nachteil wird besonders gravierend, wenn das geschnittene Gras anschließend zusammengerecht oder über eine geeignete Kehrvorrichtung vom Boden aufgenommen wird. In diesem Fall wird ein Großteil des Düngers mit dem eingesammelten Schnittgut abgeführt und kann nicht für die Düngung wirksam werden.

Der Erfindung liegt die Aufgabe zugrunde, ein Gartengerät, insbesondere zur Rasenpflege, der eingangs genannten Art zu schaffen, bei dem die Intensität der Ausbringung des Streuguts geregelt bzw. gesteuert werden kann, so dass die Vibrationsstärke an das Streugut angepasst werden kann.

Diese Aufgabe wird durch die im kennzeichnenden Teil des Anspruchs 1 angegebenen Merkmale gelöst.

Vorteilhafte Ausgestaltungen und Weiterbildungen der Erfindung ergeben sich aus den Unteransprüchen.

Dadurch, dass die Vibrationseinrichtungen direkt an der Streukammer, und vorzugsweise am unteren Ende der Streuvorrichtung angebracht sind, kann die Intensität der Ausbringung bei Streugut verschiedenster Art (Salz/Dünger/Grassamen) geregelt bzw. gesteuert werden und hängt nicht von einer unregelmäßigen Vibration des Gartengerätes selbst ab. Damit besteht die Möglichkeit einer Einstellung der an das Streugut angepassten individuellen Vibrationsstärke.

Gemäß einer vorteilhaften Ausgestaltung der Erfindung ist das Gartengerät als Rasenmäher mit einem Mähergehäuse ausgebildet und die Streuvorrichtung ist rahmenartig ausgebildet und zwischen dem Mähergehäuse und einer an diesem angebrachten Fangvorrichtung einhängbar, wobei die Streuvorrichtung einen Auswurfkanal des Mähergehäuses teilweise umschließt. Auf diese Weise ist sichergestellt, dass der Dünger oder anderes Streugut unmittelbar auf den Teil des Bodens gelangen kann, der unmittelbar vorher abgemäht wurde und von Streugut frei ist.

Gemäß einer vorteilhaften Ausgestaltung der Erfindung ist das Gartengerät durch einen Führungswagen mit einem Führungsholm und einer Ankoppelvorrichtung für die Streuvorrichtung gebildet.

In dieser Form eignet sich das Gerät beispielsweise als Streuwagen für Streusand oder Streusalz im Winterbetrieb, aber auch zum Austragen von Materialien auf vom Rasen nicht bedeckte Flächen des Gartens und/oder zur gezielten Unkraut- und Moosvernichtung.

In Verbindung mit dem Gartengerät, insbesondere in Verbindung mit dem Rasenmäher, kann die Vorrichtung auch zum Austragen von Saatgut für die Rasenerneuerung benutzt werden.

Durch die Erfindung wird erreicht, dass zwei für die Rasenpflege zwingend erforderliche Maßnahmen, nämlich das Mähen und das Düngen in einem Arbeitsgang erfolgen können, wobei die Streuvorrichtung infolge der aufgeprägten Vibrations-Rüttelbewegung auf jedem befahrenden Streckenabschnitt die genau vorbestimmte Menge des Streugutes austrägt, unabhängig davon, ob der Rasenmäher auf einer ebenen oder einer unebenen Fläche bewegt wird.

Die Streuvorrichtung ist zweckmäßigerweise U-förmig ausgebildet und weist in seinen seitlichen vertikalen Schenkeln, die sich von oben nach unten keilförmig verjüngen, Füllbehälter für das auszutragende Gut auf. Der untere, horizontal verlaufende Schenkel enthält die Austragsvorrichtung, welche Streuöffnungen aufweist, die durch eine bewegbare Verschlussleiste vollständig geöffnet und geschlossen werden können. Die Bedienungsperson kann dadurch ganz gezielt die Düngerausbringung in Betrieb setzen und z.B. bei Wendevorgängen kurzzeitig unterbrechen. Diese gesamte Austragsvorrichtung wird durch einen Elektromotor in Vibrationsbewegungen versetzt, der eine exzentrisch gelagerte Massescheibe antreibt. Eine solche Massescheibe kann beispielsweise eine exzentrische Bohrung tragen. Ein Akku des die Massescheibe antreibenden Motors kann über eine Ladebuchse aufgeladen werden.

Der Düngerstreuer wird mittels zweier Haken am Rasenmähergehäuse angehängt und stützt sich hier über zwei Konsolen an der Mäherrückwand ab. Voraussetzung für eine energieoptimierte Vibrationserzeugung ist die Bewegungsmöglichkeit des Streubehälters. Dabei stellen die beiden Einhängepunkte die Bewegungspole des Behälters dar, und sie ermöglichen zusätzlich eine seitliche Bewegung. Die wesentliche Amplitude erfolgt an der Behälterunterseite in Längsrichtung des Mähers, wodurch die gleichmäßige, definierte Austragung des Streugutes gewährleistet wird. Die harte, ungedämpfte untere Abstützung unterstützt die Förderwirkung. Der Behälter darf dabei nicht durch äußere Kräfte oder Momente in seiner Schwingfähigkeit beeinflusst werden.

Dieses durch Vibration erfolgte Förderprinzip besitzt bedeutende Vorteile gegenüber der üblichen Lösung mit Einstellung der Querschnittsfläche der Austragsöffnungen oder der Anordnung von Förderwellen oder Schnecken, die sich in dem Streugut bewegen. Diese Vorteile liegen in einer hohen Betriebssicherheit und in einer Verschleißarmut, da keine beweglichen Teile in dem aggressiven Streugut bewegt werden. Es ergeben sich keine hohen Anlaufmomente und keine Blockade durch klemmende Düngepartikel oder dergleichen. Die Herstellung kann kostengünstig infolge der geringen Teilezahl erfolgen. Es ergibt sich eine lange Laufzeit wegen des geringen Energieverbrauchs und vor allem eine sicher dosierbare Austragsmenge.

In dieser Form eignet sich das Gerät beispielsweise als Streuwagen für Streusand oder Streusalz im Winterbetrieb, aber auch zum Austragen von Materialien auf vom Rasen nicht bedeckte Flächen des Gartens und/oder zur gezielten Unkraut- und Moosvernichtung.

In Verbindung mit dem Gartengerät, insbesondere in Verbindung mit dem Rasenmäher, kann die Vorrichtung auch zum Austragen von Saatgut für die Rasenerneuerung benutzt werden.

Nachstehend werden Ausführungsbeispiele der Erfindung anhand der Zeichnungen beschrieben.

In den Zeichnungen zeigen:

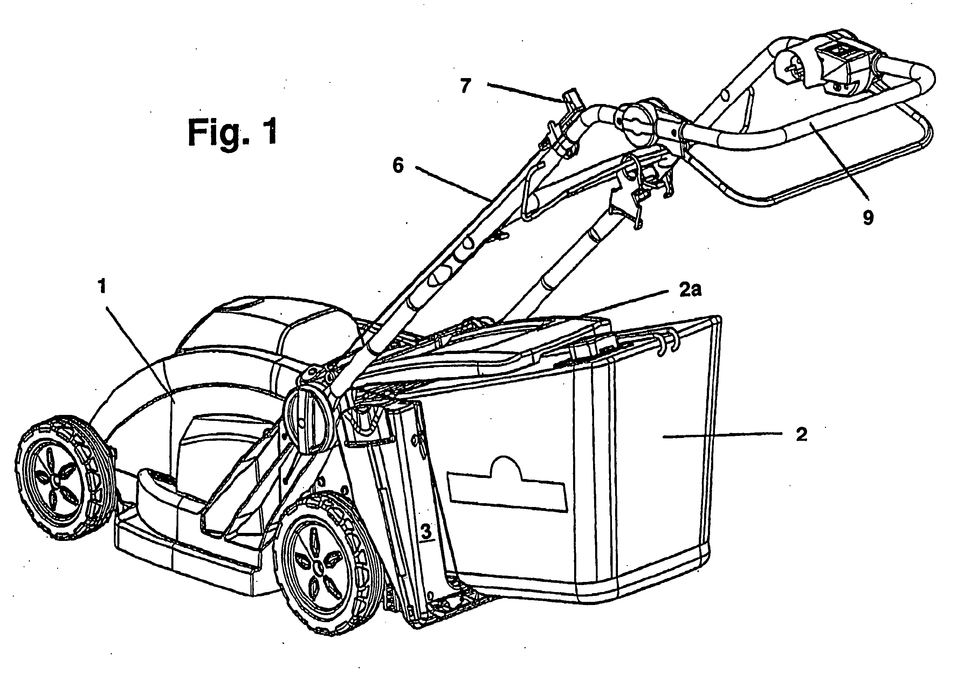

Fig. 1 eine perspektivische Darstellung eines erfindunggemäß ausgebildeten Rasenmähers mit integriertem Düngerstreuer und angesetztem Fangbehälter;
Fig. 2 eine perspektivische Darstellung des in Fig. 1 dargestellten Rasenmähers mit Düngerstreuer bei abgenommenem Fangbehälter;
Fig. 3 eine perspektivische, teilweise aufgebrochene Ansicht des am Mähgehäuse einhängbaren Düngerstreuers;
Fig. 4 eine weitere perspektivische Ansicht des am Mähgehäuse einhängbaren Düngerstreuers;
Fig. 5 eine perspektivische Ansicht eines an einem speziellen Führungswagen eingehängten Düngerstreuers.

In der Zeichnung ist als Gartengerät zur Rasenpflege ein Rasenmäher dargestellt, der mit einer Düngerstreuvorrichtung kombinierbar ist. Eine derartige Streuvorrichtung für Dünger oder anderes rieselfähiges Gut, beispielsweise Unkrautvernichter oder Moosvernichter, aber auch zum Austragen von Streugut, kann auch mit einem anderen Gartengerät zur Rasenpflege, beispielsweise mit einem Vertikutiergerät oder einer Kehrvorrichtung, vereinigt sein. Es ist auch möglich, die mit dem Gartengerät kombinierbare Austragsvorrichtung so auszubilden, dass auch flüssige Medien ausgetragen werden können.

Die Erfindung beruht auf der Erkenntnis, dass zur Schaffung und zum Erhalt einer gesunden, gut aussehenden Rasenfläche außer einem regelmäßigen Schnittvorgang eine gezielte Zufuhr von Nährstoffen erforderlich ist. Die häufige Ausbringung geringer Düngermengen oder anderer Medien ist in jedem Fall vorteilhaft gegenüber einer konzentrierten einmaligen Düngung, was zu Verbrennungserscheinungen an der Graspflanze bei zu geringer Feuchtigkeitszufuhr führen kann. Durch die Erfindung wird diese Gefahr der Überdüngung durch eine häufige gering dosierte Düngemittelzufuhr bei jedem Mähvorgang verhindert. Wichtig ist dabei eine genaue Dosierung während des Mähvorgangs, die bei den üblichen Streuwagen, bei denen nur der Durchmesser der Auslassöffnungen veränderbar ist, nicht gewährleistet werden kann.

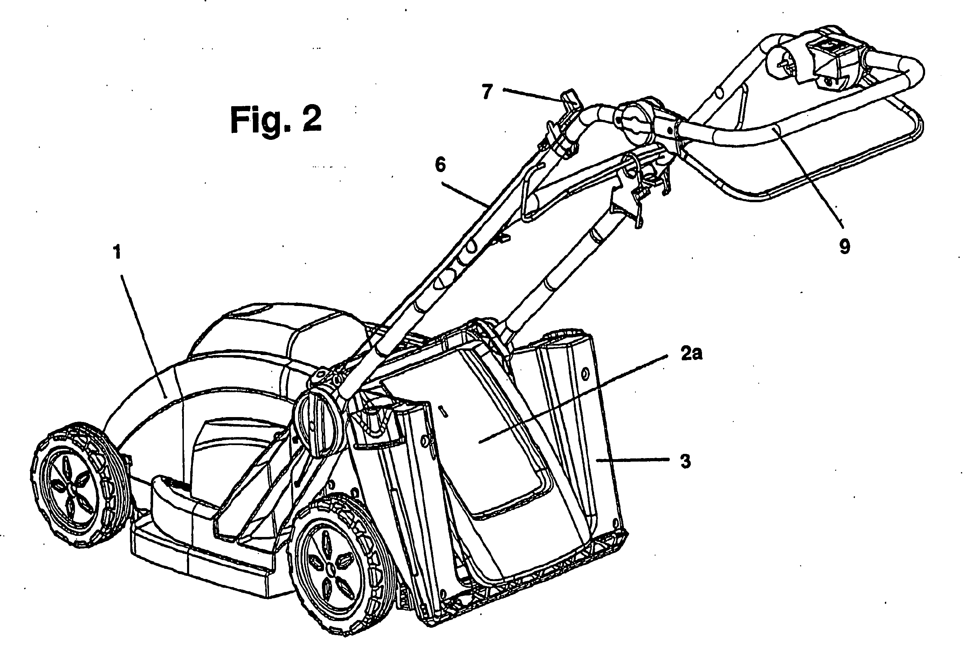

Zwischen dem Mähgehäuse 1 und dem Fangbehälter 2 ist ein Düngerstreuer 3 angeordnet, der rahmenartig als U-förmiges Gehäuse ausgebildet ist und das vom Mäher geschnittene Gut ohne Behinderung in den Fangbehälter gelangen lässt. Der Fangbehälter 2 ist mit einem Deckel 2a in bekannter Weise ausgestattet, der an seinem vorderen Ende klappbar mit dem Mähgehäuse 1 verbunden ist und die Oberseite des Düngerstreuers 3 abdeckt. Wird der Rasenmäher gemäß Fig. 2 ohne Fangbehälter genutzt, dann ist der Deckel 2a nach unten geklappt und legt das geschnittene Gut am Boden ab, ohne das Austragen des Streugutes aus dem unteren horizontalen Verbindungsschenkel des Düngerstreuers zu behindern.

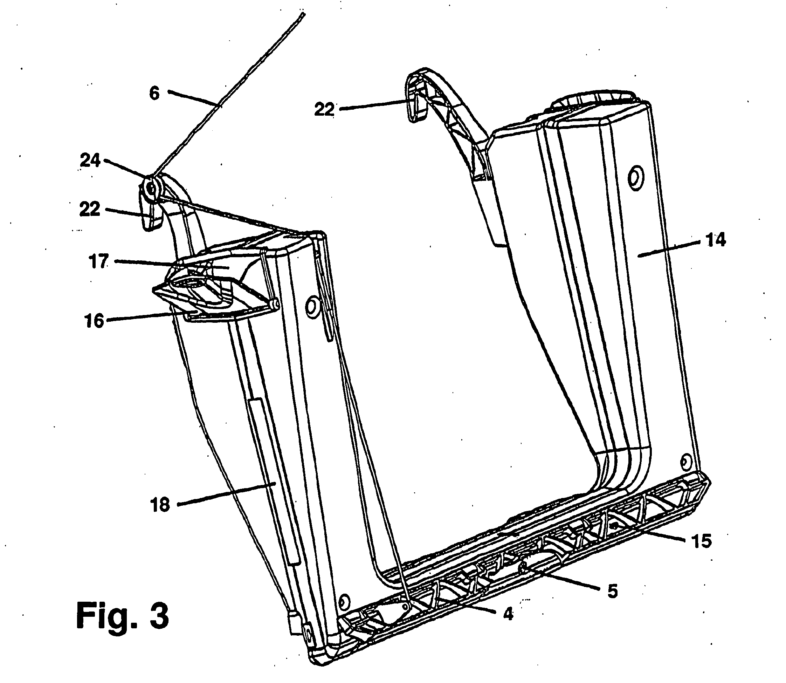

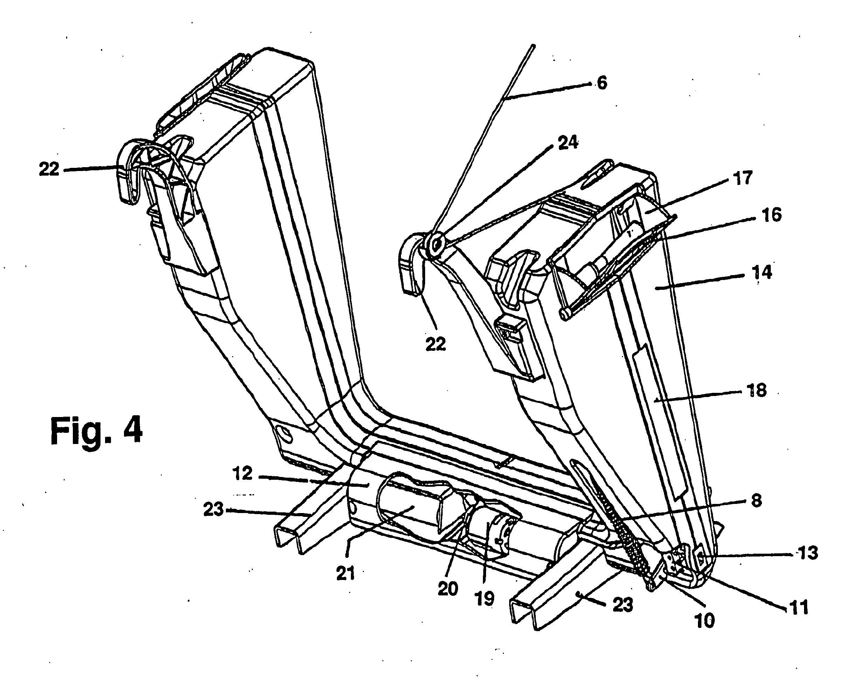

Der in den Fig. 3 und 4 im Einzelnen dargestellte Düngerstreuer weist ein U-förmiges Rahmengehäuse mit zwei vertikalen V-förmigen Aufnahmekammern 14 und eine diese in Bodennähe verbindende horizontal verlaufende Streukammer 15 auf. Diese Streukammer 15 weist nach dem Boden hin gerichtete Streuöffnungen 5 und über diesen eine verdrehbare Verschlussleiste 4 auf, die in einer Schaltstellung den Dünger durch die Öffnungen 5 austreten lässt oder diese absperrt, wenn beispielsweise beim Wenden ein Düngeraustrag unerwünscht ist. Die Verschlussleiste 4 kann über einen Seilzug 6, der mit einem Schaltelement 7 am Führungsholm 9 verbunden ist, geöffnet und geschlossen werden. Die Verschlussleiste 4 wird durch eine an einer Lasche 10 der Verschlussleiste 4 angreifende Zugfeder 8 in die Schließstellung vorgespannt.

Am oberen Ende der beiden V-förmigen Aufnahmekammern 14 befinden sich an der Vorderseite Aufhängehaken 22, mit denen der Düngerstreuer am Rasenmähergehäuse angehängt werden kann. Im angehängten Zustand stützt sich der Rasenmäher mit zwei Konsolen 23 an der Mäherrückwand ab. Die Aufhängung erfolgt dabei derart, dass die für die Durchführung des Streuvorganges erforderliche, weiter unten beschriebene Vibrationsbewegung nicht behindert wird. Die Anhängung des Fangbehälters erfolgt am Mähergehäuse oder am Düngerstreuer.

Die beiden Aufnahmekammern 14 weisen einen Deckel 16 mit Einfülltrichter 17 auf, in den das rieselfähige Streugut eingebracht werden kann. Der Füllstand ist über ein längliches Fenster 18 erkennbar.

Aus den beiden Aufnahmekammern 14 gelangt das rieselfähige Streugut durch Schwerkraft und Vibrationsbewegung in die horizontal verlaufende Streukammer 15. Das Fördersystem der Düngerausbringeinheit basiert auf dem Prinzip der Unwucht- oder Vibrationsförderung, die für den angestrebten, genau dosierbaren Austrag des Mediums von entscheidender Bedeutung ist. Allein durch Veränderung der Größe der Streuöffnungen 5 ist eine genaue Dosierung nicht erreichbar, weil der Mäher und demgemäß der Düngerstreuer während der Bewegung des Rasenmähers einer nicht definierten unterschiedlichen Bewegung ausgesetzt ist. Aus diesem Grund ist innerhalb der Abdeckung 12, aber außerhalb der Streukammer 15 und benachbart zu dieser ein durch einen Akku 21 gespeister Motor 19 vorgesehen, der als Unwucht zur Vibrationserzeugung eine exzentrisch gelagerte Massescheibe 20 trägt, die die gesamte Austragsvorrichtung in eine definierte Vibration versetzt, wodurch ein gleichmäßiges Austragen gewährleistet wird. Die Vibration kann auch durch andere Maßnahmen, z.B. elektronisch, erzeugt werden. Voraussetzung für ein gleichmäßiges Austragen und die energieoptimierte Vibrationserzeugung ist die Bewegungsmöglichkeit der Streukammer bzw. des sie tragenden Düngerstreuers. Dabei stellen die beiden Einhängepunkte 22 die Bewegungspole des Düngerstreuers dar, indem sie zusätzlich auch eine seitliche Bewegung ermöglichen. Die wesentliche Amplitude erfolgt an der Unterseite in Längsrichtung des Mähers. Die harte, ungedämpfte untere Abstützung über die Konsolen 23 unterstützt die Förderwirkung. Der Behälter soll dabei nicht durch äußere Kräfte oder Momente in seiner Schwingfähigkeit beeinflusst werden. Aus diesem Grunde erfolgt die Verlegung des Seilzuges 6 entlang einer Umlenkrolle 24 nahe an einem der Einhängepunkte der Haken 22. Dieses Förderprinzip besitzt wesentliche Vorteile gegenüber der herkömmlichen Anordnung der Veränderung des Lochdurchmessers oder von Anordnungen mit Förderwellen oder Schnecken, die sich im Streugut bewegen. Der Akku 21 ist über eine Ladebuchse 13 über Netz aufladbar. Ein Motorschalter 11 wird durch die Lasche 10 betätigt und durch die Feder 8 in Ausschaltstellung vorgespannt. Über den Seilzug 6 ist der Schalter 11 gleichzeitig mit der Öffnung der Verschlussleiste 4 einschaltbar.

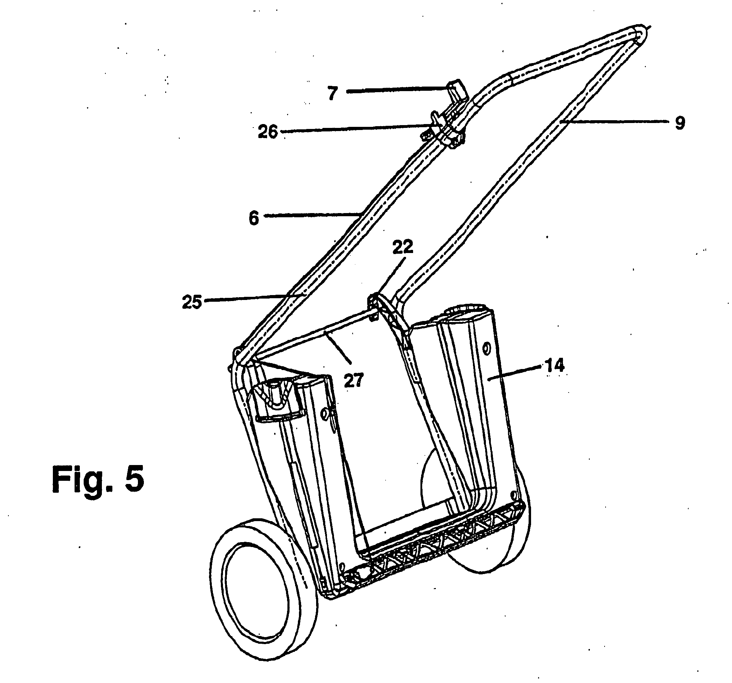

Aufgrund der dem Düngerstreuer durch Motor 19 und Massescheibe 20 aufgeprägten Vibrationsbewegung kann dieser Düngerstreuer auch unabhängig von dem ihm zugeordneten Rasenmäher, Vertikutiergerät oder dergleichen benutzt werden. Zu diesem Zweck kann ein einfacher Führungswagen 25 gemäß Fig. 5 vorgesehen werden, der lediglich aus einem einachsigen Fahrgestell mit Führungsholm 9 und Schaltelement 7 besteht. Der Düngerstreuer kann mit seinen Anhängehaken 22 an einer Querstange 27 des Führungswagens eingehängt werden. Voraussetzung für einen universellen Betrieb ist eine einfache Übertragung des Seilzuges 6, mit dem die bewegbare Verschlussleiste 4 bzw. der Schalter des Vibrationsmotor 19 steuerbar ist. Gewährleistet wird dies durch eine elastische Ausbildung einer Halteschelle 26, die eine federelastische Rastlasche enthält, die das Schaltelement 7 in der gewünschten Betriebsstellung "EIN" oder "AUS" hält. Wird die Rastlasche nach außen gebogen, kann der Schaltschieber aus der Halteschelle 26 entnommen werden.

Über den kompakt ausgebildeten Führungswagen 25 kann der Düngerstreuer auch an Stellen eingesetzt werden, die vom Rasenmäher oder Vertikutiergerät nicht oder nur schwer erreicht werden können. Auch kann nachträglich nach dem Mähvorgang oder dem Vertikutiervorgang oder zu beliebiger Zeit ein Dünger oder auch ein Unkrautvernichter oder Saatgut gezielt an bestimmten Stellen ausgetragen werden.

Besonders geeignet ist der erfindungsgemäße Düngerstreuer 3 auch zum Austragen von Sand, insbesondere von Streusand oder Splitt auch in Verbindung mit Salz im Winterdienst zur Besandung von beschneiten oder vereisten Wegstrecken oder Straßen.

Vorbehalten für die Erfindung soll auch die Ausbildung als Flüssigkeitsspender vorgesehen bleiben, durch den flüssige Nährstoffe oder Salzlösungen gezielt in Verbindung mit einem Gartengerät oder einem Führungswagen ausgetragen werden können.

## Patentansprüche

1. Gartengerät, insbesondere zur Rasenpflege mit einer Streuvorrichtung (3) die an ihrem oberen Ende durch Aufhängevorrichtungen (22) an dem Gartengerät (1) aufgehängt ist, und mit einer mit Streuöffnungen (5) versehenen, quer zur Fahrtrichtung angeordneten Streukammer (15) ausgerüstet ist, die nach dem Boden hin gerichtete, durch eine Verschlussleiste (4) verschließbare Streuöffnungen (5) aufweist, wobei an der Streukammer (15) äußere Mittel zur Erzeugung einer Vibration angreifen, wodurch die Austragsförderung des Streugutes bestimmt wird, **dadurch gekennzeichnet, dass**
die Mittel zur Erzeugung der Vibration durch auf der Außenseite der Streukammer (15) und benachbart zu dieser angeordnete Vibrations-Erzeugungseinrichtungen (19, 20, 21) gebildet sind; und
die Streuvorrichtung (3) an ihrem unteren Ende über Konsolen (23) an dem Gartengerät hart und ungedämpft ohne Behinderung ihrer Vibrationsbewegung abgestützt ist.

2. Gartengerät nach Anspruch 1, **dadurch gekennzeichnet, dass** die Vibrationseinrichtungen durch mechanische und/oder elektronische Mittel gebildet sind.

3. Gartengerät nach Anspruch 1 oder 2, **dadurch gekennzeichnet, dass** die Vibrationseinrichtungen durch eine aus Akku (21), Motor (19) und Massescheibe (20) ausgebildete Vibrationseinheit benachbart zur Streukammer (15) gebildet sind.

4. Gartengerät nach Anspruch 3, **dadurch gekennzeichnet, dass** die Verschlussleiste (4) durch ein Schaltelement (7) an einem Führungsholm (9) des Gartengerätes bewegbar ist, das gleichzeitig einen Schalter (11) für den Motor (19) betätigt.

5. Gartengerät nach einem der vorhergehenden Ansprüche, **dadurch gekennzeichnet, dass** das Gartengerät als Rasenmäher mit einem Mähergehäuse (1) ausgebildet ist.

6. Gartengerät nach Anspruch 5, **dadurch gekennzeichnet, dass** die Streuvorrichtung (3) rahmenartig ausgebildet ist und zwischen dem Mähergehäuse (1) und einer an diesem angebrachten Fangvorrichtung (2) einhängbar ist, wobei die Streuvorrichtung einen Auswurfkanal des Mähergehäuses (1) teilweise umschließt.

7. Gartengerät nach einem der Ansprüche 5 und 6, **dadurch gekennzeichnet, dass** die Streuvorrichtung (3) U-förmig ausgebildet ist und mit ihren seitlichen V-förmig nach unten verjüngten Schenkeln Vorratsbehälter für das Streugut bildet, die unten in der quer verlaufenden Streukammer (15) münden.

8. Gartengerät nach einem der Ansprüche 5 bis 7, **dadurch gekennzeichnet, dass** die Streuvorrichtung (3) mittels zweier Haken (22) am Rasenmähergehäuse angehängt und über die Konsolen (23) an der Rückwand des Mähergehäuses derart abgestützt ist, dass die Streuvorrichtung eine allseitige Bewegungsmöglichkeit möglichst ungedämpft beibehält.

9. Gartengerät nach einem der Ansprüche 1 bis 3, **dadurch gekennzeichnet, dass** das Gartengerät durch einen Führungswagen (25) mit einem Führungsholm (9) und einer Ankoppelvorrichtung (27) für die Streuvorrichtung (3) gebildet ist.

## Claims

1. Garden machine, in particular for lawn care, with a spreader device (3) suspended at its upper end by suspension devices (22) on the garden machine (1), and with a spreader chamber (15) fitted with spreader openings (5) which is arranged transverse to the direction of travel and comprises spreader openings (5) which are directed at the ground and can be closed by a closing strip (4), wherein external means act on the spreader chamber (15) to generate a vibration whereby the delivery rate of the spread product is determined, **characterised in that**
the means to generate vibrations are formed by vibration-generating devices (19, 20, 21) arranged on the outside of the spreader chamber (15) and adjacent thereto; and
the spreader device (3) at its lower end is supported rigidly and undamped on the garden machine via brackets (23) without hindering its vibration movement.

2. Garden machine according to claim 1, **characterised in that** the vibration devices are formed by mechanical and/or electronic means.

3. Garden machine according to claim 1 or 2, **characterised in that** the vibration devices are formed by a vibration unit comprising battery (21), motor (19) and mass plate (20), adjacent to the spreader chamber (15).

4. Garden machine according to claim 3, **characterised in that** the closing strip (4) can be moved by a switch element (7) on a guide bar (9) of the garden machine, which element simultaneously operates a switch (11) for the motor (19).

5. Garden machine according to any of the preceding claims, **characterised in that** the garden machine is formed as a lawnmower with a mower housing (1).

6. Garden machine according to claim 5, **characterised in that** the spreader device (3) is formed frame-like and can be suspended between the mower housing (1) and a capture device (2) mounted thereon, wherein the spreader device partly surrounds an ejection channel of the mower housing (1).

7. Garden machine according to any of claims 5 and 6, **characterised in that** the spreader device (3) is U-shaped and with its lateral V-shaped legs tapering downward forms storage containers for the spread product which open at the bottom into the transverse spreading chamber (15).

8. Garden machine according to any of claims 5 to 7, **characterised in that** the spreader device (3) is suspended on the lawnmower housing by means of two hooks (22) and supported on the rear wall of the mower housing via the brackets (23) such that the spreader device retains its possibility of movement to all sides as undamped as possible.

9. Garden machine according to any of claims 1 to 3, **characterised in that** the garden machine is formed by a guide trolley (25) with a guide bar (9) and a coupling device (27) for the spreader device (3).

## Revendications

1. Appareil de jardinage notamment dévolu à l'entretien des gazons, comprenant un dispositif d'épandage (3) suspendu par son extrémité supérieure audit appareil de jardinage (1), par l'intermédiaire de dispositifs de suspension (22), et pourvu d'une chambre d'épandage (15) qui est percée d'orifices d'épandage (5), est agencée transversalement par rapport à la direction du déplacement, et est dotée d'orifices d'épandage (5) pointant vers le sol et pouvant être obturés par une barrette obturatrice (4), sachant que des moyens extérieurs viennent en prise avec ladite chambre d'épandage (15) pour engendrer une vibration ayant pour effet de déterminer le convoyage ciblant le déversement de la substance répandue, **caractérisé par le fait que**
les moyens, conçus pour engendrer la vibration, sont formés par des systèmes (19, 20, 21) générateurs de vibration qui sont disposés sur la face extérieure de la chambre d'épandage (15), et au voisinage de cette dernière ; et
le dispositif d'épandage (3) est en appui rigide et non amorti sur l'appareil de jardinage par son extrémité inférieure, par l'intermédiaire de consoles (23), sans aucune entrave à son mouvement vibratoire.

2. Appareil de jardinage selon la revendication 1, **caractérisé par le fait que** les systèmes vibreurs se présentent comme des moyens mécaniques et/ou électroniques.

3. Appareil de jardinage selon la revendication 1 ou 2, **caractérisé par le fait que** les systèmes vibreurs revêtent, au voisinage de la chambre d'épandage (15), la forme d'une unité de vibration constituée d'un accumulateur (21), d'un moteur (19) et d'un disque (20) à balourd.

4. Appareil de jardinage selon la revendication 3, **caractérisé par le fait que** la barrette obturatrice (4) est mobile, sur un étrier de conduite (9) dudit appareil de jardinage, par l'intermédiaire d'un élément sélecteur (7) actionnant simultanément un interrupteur (11) affecté au moteur (19).

5. Appareil de jardinage selon l'une des revendications précédentes, **caractérisé par le fait que** ledit appareil de jardinage est réalisé sous la forme d'une tondeuse à gazon équipée d'un carter (1).

6. Appareil de jardinage selon la revendication 5, **caractérisé par le fait que** le dispositif d'épandage (3) est réalisé à la manière d'un cadre, et peut être accroché entre le carter (1) de la tondeuse et un dispositif collecteur (2) installé sur ce dernier, ledit dispositif d'épandage entourant partiellement un canal d'éjection dudit carter (1) de tondeuse.

7. Appareil de jardinage selon l'une des revendications 5 et 6, **caractérisé par le fait que** le dispositif d'épandage (3) est réalisé avec configuration en U et forme, par ses branches latérales rétrécies vers le bas en décrivant un V, des réceptacles de réserve qui sont destinés à la substance répandue et débouchent, en partie basse, dans la chambre d'épandage (15) s'étendant transversalement.

8. Appareil de jardinage selon l'une des revendications 5 à 7, **caractérisé par le fait que** le dispositif d'épandage (3) est suspendu au carter de la tondeuse à gazon au moyen de deux crochets (22) et prend appui contre la paroi postérieure dudit carter de tondeuse, par l'intermédiaire des consoles (23), de façon telle que ledit dispositif d'épandage conserve une faculté de mouvement universel amorti le moins possible.

9. Appareil de jardinage selon l'une des revendications 1 à 3, **caractérisé par le fait que** ledit appareil de jardinage se présente comme un chariot de guidage (25), muni d'un étrier de conduite (9) et d'un dispositif de rattachement (27) dédié au dispositif d'épandage (3).
